# FASCICULE DE BREVET EUROPEEN

(11) **EP 3 172 499 B1**
(45) Date de publication et mention de la délivrance du brevet: **25.12.2019**
(21) Numéro de dépôt: 15741180.2
(22) Date de dépôt: 22.07.2015
(51) Int. Cl.: F25B 6/04, F25B 5/02, F25B 25/00, F25B 41/04

(54) **INSTALLATION DE PRODUCTION DE FROID COMPRÉNANT DES MOYENS DE CONDENSATION À LA FOIS PAR AIR ET PAR EAU, AINSI QUE SON PROCÉDÉ DE MISE EN OEUVRE**
KÄLTEERZEUGUNGSVORRICHTUNG MIT MITTEL ZUR GLEICHZEITIGEN KONDENSATION DURCH LUFT UND VERFAHREN ZUR IMPLEMENTIERUNG DIESER EINRICHTUNG
COLD PRODUCTION APPARATUS, INCLUDING MEANS FOR CONDENSATION BY AIR AND WATER SIMULTANEOUSLY, AND THE METHOD FOR IMPLEMENTING SAID FACILITY

(30) Priorité: 22.07.2014 LU 92502
(43) Date de publication de la demande: 31.05.2017
(73) Titulaire: Syrha S.A., 1212 Luxembourg (LU)
(72) Inventeur: BRESSON, Loïc, F-15500 Massiac (FR); SAILHAN, Jean-François, F-15500 Massiac (FR); PORTAL, Denis, F-43100 Brioude (FR)
(74) Mandataire: Lecomte & Partners
(86) Numéro de dépôt international: PCT/EP2015/066766
(87) Numéro de publication internationale: WO 2016/012501

(56) Documents cités:
- WO-A1-2010/056556
- WO-A2-2007/146050

## Description

La présente invention concerne une installation de production de froid, ainsi qu'un procédé visant à la mise en oeuvre de cette installation.

L'invention vise plus particulièrement, mais non exclusivement, la production de froid à usage industriel ou commercial. L'invention vise la production de froid négatif, c'est-à-dire à une température inférieure à 0°C, mais aussi de froid positif, c'est-à-dire à une température supérieure à 0°C et inférieure à 20°C.

De façon habituelle, du froid est produit en faisant circuler un fluide frigorigène, ou réfrigérant, le long d'une ligne de circulation s'étendant en général selon une boucle fermée. Un compresseur dirige tout d'abord le réfrigérant à haute pression vers un condenseur, dans lequel ce réfrigérant passe de l'état gazeux à l'état liquide et cède par conséquent des calories. Le froid est donc produit, en majeure partie, durant cette étape de condensation.

Puis le réfrigérant condensé traverse un détendeur, où il subit une chute de pression tout en restant majoritairement à l'état liquide. Le réfrigérant détendu est ensuite dirigé vers un évaporateur, où la partie liquide du réfrigérant passe à l'état gazeux et absorbe les calories présentes au voisinage de cet évaporateur. Le réfrigérant évaporé est enfin aspiré par le compresseur, de sorte que le cycle se renouvelle autant que nécessaire pour obtenir et maintenir la température voulue.

L'invention vise plus particulièrement les moyens de condensation, mis en œuvre lors de la production de froid par une installation utilisant un condenseur.

Une première solution connue fait appel à un ou plusieurs condenseur(s) à air, équipé d'un serpentin interne dans lequel circule un réfrigérant, lequel est refroidi par l'air périphérique. Cette circulation peut être statique, à savoir que l'air circule par convection naturelle autour du condenseur. A titre d'alternative, cette circulation peut être forcée, grâce à l'utilisation d'un ou de plusieurs ventilateur(s).

Cependant un tel condenseur présente certaines limites, en particulier lorsque l'air de refroidissement présente une température élevée. Ceci peut survenir en période estivale, ou encore lorsque l'installation de production de froid se trouve dans un environnement industriel qui dégage beaucoup de chaleur, par exemple à proximité d'appareils de cuisson et/ou lorsque l'installation est dans un lieu confiné et pas ou peu ventilé.

Une seconde solution connue fait appel à un ou plusieurs condenseur(s) à eau, dans lequel le réfrigérant est refroidi par l'eau par l'intermédiaire d'un échangeur. De façon typique, le réfrigérant circule à la périphérie de tubes, dans lesquels l'eau est mise en mouvement en vue de l'échange de chaleur.

Un tel condenseur à eau permet de remédier aux inconvénients du condenseur à air, puisque son efficacité est satisfaisante même en cas de température ambiante élevée, à savoir supérieure à 25°C. En revanche, ce condenseur à eau est coûteux, notamment car il consomme de grandes quantités d'eau.

US-A-6862894 décrit une installation de production de froid, intégrant un condenseur à air associé à un condenseur à eau. En fonction de la pression du réfrigérant, le condenseur à eau est activé afin de former un appoint au condenseur à air. A cet effet, de l'eau de condensation est susceptible de circuler dans le condenseur. Ce document ne donne cependant pas d'informations complémentaires, sur la gestion de cette eau de condensation.

WO 2010/056556 A1 divulgue une installation de production de froid conforme au préambule de la revendication 1.

Ceci étant précisé, l'invention vise à améliorer l'art antérieur, conforme à l'enseignement de US-A-6862894 évoqué ci-dessus. Elle vise en particulier à proposer une installation de production de froid, comportant des moyens de condensation à la fois par air et par eau, dans laquelle l'eau de condensation est gérée de façon judicieuse. L'invention vise enfin une telle installation, qui peut être construite de manière commode, soit comme installation neuve soit à partir d'une installation existante.

A cet effet, l'invention a pour objet une installation selon la revendication 1, l'installation étant une installation de production de froid, comprenant au moins une unité de production de froid qui comporte une boucle principale de circulation d'un fluide frigorigène, ou réfrigérant, ainsi que, disposés selon le sens d'écoulement du réfrigérant dans la boucle de circulation :
- des moyens de compression du réfrigérant,
- des moyens de condensation du réfrigérant comprimé, comprenant un condenseur à air et un condenseur à eau principal
- des moyens de détente du réfrigérant comprimé,
- des moyens d'évaporation du réfrigérant détendu, comprenant un évaporateur principal,
caractérisée en ce qu'elle comprend en outre un dispositif auxiliaire de circulation d'eau, lequel comporte au moins une première cuve de réception d'eau, au moins une seconde cuve de réception d'eau, ce dispositif définissant au moins un premier trajet, dit d'extraction de calories par l'eau, depuis la première cuve vers la seconde cuve, le ou chaque premier trajet comprenant au moins une section principale d'extraction de calories par l'eau, propre à coopérer avec une section principale d'échange de chaleur du réfrigérant, dans le condenseur à eau principal, ce dispositif définissant en outre au moins un second trajet, dit de refroidissement d'eau, depuis la seconde cuve vers la première cuve, le ou chaque second trajet comprenant au moins une section (82, 92) de refroidissement d'eau, dans un échangeur de chaleur.

En service normal, on choisit d'utiliser à la fois la condensation à air et la condensation à eau. Dans ce cas, on peut par exemple fixer l'intensité de la condensation à air, en régulant celle de la condensation à eau, en fonction des besoins globaux du système. On peut également faire varier l'intensité de chacun de ces deux types de condensation.

On peut aussi choisir d'utiliser le condenseur à air et, uniquement en appoint, le condenseur à eau. Dans ce cas, la condensation à eau est également utilisée, par exemple si la mesure d'un paramètre du réfrigérant se situe en dehors d'une plage de valeur prédéfinie. De façon typique, le paramètre mesuré du réfrigérant est représentatif de sa température à l'intérieur de la ligne de circulation. Ce paramètre peut, par exemple, être la température proprement dite, mais aussi la pression.

Les moyens de condensation par eau sont alors activés. Cette activation correspond à une modification de la marche de l'installation, entre une configuration inactive où le condenseur à eau n'extrait sensiblement aucune calorie du réfrigérant, et une configuration active où ce condenseur à eau extrait une fraction significative de ces calories.

La configuration inactive peut correspondre à une situation où le réfrigérant ne circule pas dans le condenseur à eau. On peut aussi prévoir que le réfrigérant circule dans le condenseur. Dans ce dernier cas, le condenseur peut être vide d'eau, ou bien contenir de l'eau qui n'extrait pas de calories, notamment parce qu'elle n'est pas mise en circulation.

En revanche, dans la configuration active, le réfrigérant circule dans le condenseur et il y a extraction de calories par l'eau de condensation. L'homme du métier pourra prendre en compte différents paramètres opératoires en vue d'une extraction optimale, en particulier le débit et/ou la température de l'eau.

L'invention prévoit une condensation par eau, qui peut venir en complément de la condensation par air. De la sorte, la condensation globale est assurée de façon efficace, quelles que soient les conditions opératoires. Dans ces conditions, les différents éléments mécaniques de cette unité peuvent être construits au plus près de leur dimensionnement nominal.

Par conséquent, les frais de fabrication de ces éléments sont réduits, tout comme leurs coûts de fonctionnement, ce qui est avantageux en termes économiques. La durée de vie de ces appareils est en outre améliorée, tout en limitant les risques de fuite du fait que le risque de surpression est maitrisé.

Selon l'invention de l'eau froide, dite d'appoint ou de complément, circule dans le condenseur à eau, de manière à extraire des calories du réfrigérant. L'invention prévoit de stocker cette eau froide dans une première cuve, puis de la diriger vers une seconde cuve, après qu'elle a été réchauffée lors de son passage dans l'unité de production de froid.

Afin de limiter la consommation globale en eau d'appoint, l'invention prévoit en outre de renvoyer cette eau d'appoint, en direction de la première cuve de stockage. Or, une installation de production de froid est périodiquement à l'arrêt, ou en fonctionnement restreint, notamment la nuit lorsqu'elle équipe une habitation, des bureaux ou des locaux industriels. L'invention prévoit alors, de façon avantageuse, d'envoyer l'eau d'appoint depuis la première vers la deuxième cuve, pendant la période de fonctionnement, puis de renvoyer cette eau depuis la deuxième vers la première cuve, pendant la période d'arrêt ou de fonctionnement restreint.

Il convient par ailleurs de refroidir l'eau chaude d'appoint, renvoyée depuis la deuxième cuve de stockage, avant de l'admettre à nouveau dans la première cuve de stockage, afin qu'elle soit à nouveau utilisable dans la boucle de réfrigération. L'invention prévoit de réaliser ce refroidissement de façon la plus judicieuse possible, en fonction notamment des températures extérieure et intérieure. On pourra par exemple utiliser l'air extérieur frais pour refroidir cette eau, et/ou le réfrigérant lors de son évaporation dans l'unité de production de froid ou tout autre échangeur calorifique.

On notera aussi que, selon l'invention, la première cuve de stockage et la seconde cuve de stockage peuvent être confondues en une unique cuve. Dans ces conditions, les trajets entre une cuve et une autre sont assimilés à des boucles autour de cette cuve de stockage unique.

Dans la présente description et les présentes revendications, les termes « froid » et « chaud » ne sont pas liés à une valeur de température prédéterminée. Ils sont définis pour un trajet donné de l'eau d'appoint, entre les deux cuves de stockage. Encore exprimé, l'eau est dite « froide » ou « refroidie » à la sortie d'un échangeur, parce que de l'eau initialement « chaude » vient de céder des calories dans cet échangeur. De façon analogue l'eau est dite « chaude » ou « réchauffée » à la sortie d'un échangeur, parce que de l'eau initialement « froide » vient de récupérer des calories dans cet échangeur.

Selon des aspects avantageux mais non obligatoires de l'invention, une telle installation peut comprendre une ou plusieurs des caractéristiques suivantes:
- le premier trajet comprend en outre une section secondaire d'extraction de calories par l'eau, propre à coopérer avec une section secondaire d'échange de chaleur du réfrigérant, dans un condenseur à eau secondaire, ces deux condenseurs à eau étant disposés de part et d'autre du condenseur à air.
- le premier trajet comprend en outre une section de refroidissement de l'eau surchauffée, dont la température est supérieure à un seuil prédéfini, ladite section s'étendant dans un échangeur de chaleur à air.
- le second trajet comprend une section de refroidissement par air, s'étendant dans un échangeur de chaleur à air.
- l'unité de production comprend une ligne dérivée d'évaporation piquée sur la boucle principale, cette ligne dérivée définissant une boucle secondaire de circulation et comprenant une section secondaire d'évaporation du réfrigérant, le trajet de refroidissement d'eau comprenant une section de refroidissement par le réfrigérant propre à coopérer avec cette section secondaire d'évaporation.

L'invention a également pour objet un procédé selon la revendication 8, le procédé étant un procédé de mise en œuvre de l'installation ci-dessus, dans lequel on fait circuler du réfrigérant le long de la boucle de circulation principale de manière à produire du froid ; on fait circuler de l'eau froide depuis la première cuve le long du premier trajet et on extrait des calories du réfrigérant circulant dans la section principale d'échange de chaleur, au moyen de cette eau froide circulant dans la section principale d'extraction de calories ; on envoie l'eau réchauffée, sortant de cette section principale d'extraction de calories, vers la seconde cuve, le long du premier trajet ; puis on renvoie de l'eau réchauffée, depuis la seconde cuve vers la première cuve le long du second trajet, et on refroidit cette eau réchauffée en la faisant passer au moins une fois dans au moins une section de refroidissement d'eau.

Selon des aspects avantageux mais non obligatoires de l'invention, un tel procédé peut comprendre une ou plusieurs des caractéristiques suivantes:
- on recycle l'eau depuis l'aval vers l'amont du condenseur à eau principal jusqu'à ce qu'une valeur représentative de la pression du réfrigérant, en aval du condenseur à eau principal, passe au-dessous d'une valeur seuil.
- on estime une température seuil de l'eau, et on refroidit l'eau en la faisant circuler une ou plusieurs fois dans la section de refroidissement par air jusqu'à ce que la température de l'eau passe au-dessous de ce seuil.
- on estime une température seuil de l'eau, on fait circuler le réfrigérant dans la boucle secondaire et on refroidit l'eau en la faisant circuler dans la section de refroidissement par le réfrigérant afin que la température de l'eau passe au-dessous de ce seuil.
- on fait circuler l'eau une ou plusieurs fois dans la section de refroidissement par air et on fait ensuite circuler cette eau dans la section de refroidissement par le réfrigérant avant d'admettre cette eau dans la première cuve.

L'invention sera mieux comprise et d'autres avantages de celle-ci apparaitront plus clairement à la lecture de la description qui va suivre, donnée à titre d'exemple non limitatif et faite en référence aux dessins suivants dans lesquels:
- La figure 1 est une vue schématique illustrant une installation de production de froid conforme à l'invention.
- Les figures 2 et suivantes sont des vues schématiques, illustrant différentes phases de fonctionnement de l'installation de la figure 1.

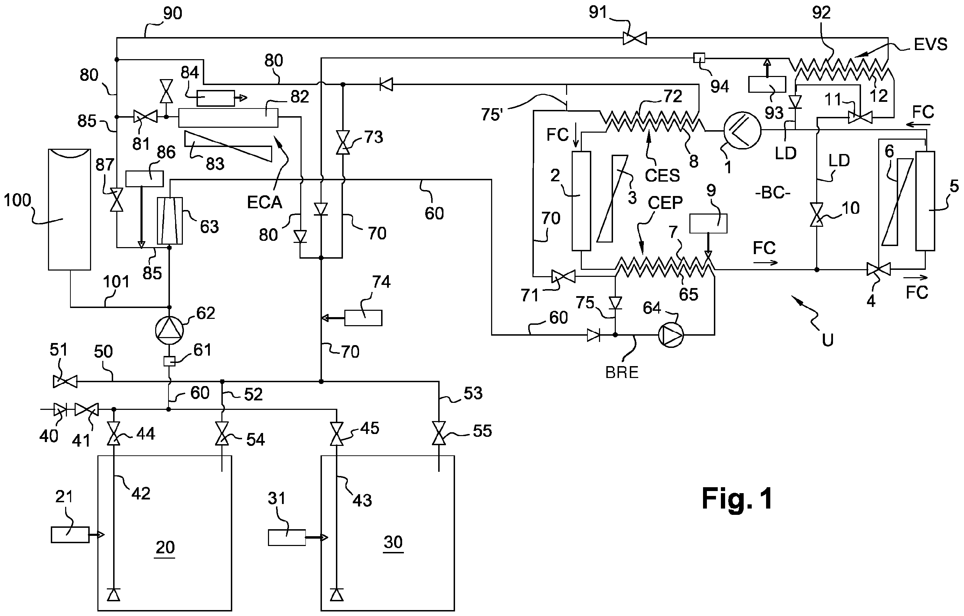

L'installation de production de froid, conforme à l'invention, comprend tout d'abord une unité de production de froid, de type connu en soi. Cette unité, qui est illustrée sur la figure 1 où elle est affectée de la référence U, comprend tout d'abord des éléments mécaniques, qui sont connus en soi et dont la structure ne sera pas décrite plus en détail dans ce qui suit, à savoir :
- une ligne de circulation en boucle fermée BC, à l'intérieur de laquelle circule un fluide frigorigène, encore dénommé réfrigérant, de tout type approprié. La progression du réfrigérant dans la boucle BC, matérialisée par les flèches FC, s'opère selon le sens inverse des aiguilles d'une montre dans l'exemple. Cette progression est illustrée de façon simpliste mais peut être adaptée à des systèmes frigorifiques plus complexes ;
- un compresseur 1 assurant la circulation et la mise en pression du réfrigérant ;
- un condenseur à air 2, associé à un ventilateur 3, prévu immédiatement en aval du compresseur, en référence au sens de circulation du réfrigérant ;
- un détendeur 4, qui est placé en aval du condenseur à air 2, ainsi que d'un condenseur à eau décrit plus en détail dans ce qui suit ;
- un évaporateur principal 5, qui est placé en aval du détendeur 4, associé à son ventilateur 6 ou tout autre système d'évaporation.

Selon l'invention, la boucle BC de circulation est équipée de deux sections d'échange de chaleur, dans lesquelles le réfrigérant est mis en échange de chaleur avec de l'eau d'appoint, laquelle est destinée notamment à la condensation de ce réfrigérant. Une première section d'échange 7, qui va former un condenseur à eau principal comme on le verra dans ce qui suit, est intercalée entre le condenseur à air et le détendeur. Un capteur de pression 9 est prévu immédiatement en aval de cette section 7, en référence à l'écoulement du réfrigérant. Une deuxième section d'échange 8, qui va former un condenseur à eau secondaire comme on le verra dans ce qui suit, est intercalée entre le compresseur et le condenseur à air.

De plus la boucle de circulation BC définit une ligne de dérivation LD, dont une première extrémité débouche entre la section d'échange 7 et le détendeur 4, alors que son autre extrémité débouche entre l'évaporateur principal 5 et le compresseur 1. Cette ligne de dérivation, qui est munie de vannes 10 et 11, définit une section d'échange de chaleur 12, dont la fonction sera décrite plus en détail dans ce qui suit.

L'installation conforme à l'invention comprend en outre un dispositif de circulation d'eau, qui comporte tout d'abord deux cuves de stockage 20 et 30, équipées de capteurs de température respectifs 21 et 31. Afin de contrôler la température de l'eau qu'elles reçoivent, ces cuves de stockage sont avantageusement isolées thermiquement, par tout moyen approprié. Elles peuvent également être enterrées, totalement ou partiellement. Ces cuves 20 et 30 sont réalisées par exemple en matériau métallique. A titre indicatif, leur contenance est par exemple comprise entre 50 et 800 000 litres.

Une conduite principale d'aspiration 40, associée à une vanne 41, est raccordée à une source d'eau non représentée. Cette conduite 40 se divise en deux conduites dérivées 42 et 43, équipées de vannes respectives 44 et 45, lesquelles débouchent dans les cuves 20 et 30.

Une conduite principale d'évacuation 50, associée à une vanne 51, est raccordée à l'égout. Cette conduite 50 se divise en deux conduites dérivées 52 et 53, équipées de vannes respectives 54 et 55, lesquelles débouchent dans les cuves 20 et 30.

Le dispositif de circulation d'eau comprend en outre une conduite 60, dite d'arrivée d'eau, qui est piquée sur la conduite 43. Cette conduite est successivement équipée d'un capteur de débit 61, d'une pompe 62, d'un régulateur de pression 63 et d'un circulateur 64. Elle débouche ensuite dans une section d'échange de chaleur 65, coopérant avec la section 7 de la boucle de circulation, de façon à former un condenseur à eau principal CEP.

A titre d'exemple non limitatif, le volume intérieur de ce condenseur est équipé d'une multiplicité de tubes, constitutifs de la section d'échange 7, tubes dans lesquels circule l'eau. Le réfrigérant peut circuler à la périphérie de ces différents tubes, dans la section d'échange 65, de façon à extraire les calories produites lors de la compression de ce réfrigérant.

En aval de la section d'échange 65, en référence à l'écoulement normal de l'eau, il est prévu une conduite 70 de retour d'eau s'étendant en direction de la conduite 53. Cette conduite de retour 70 est pourvue d'une vanne 71, puis définit une section d'échange de chaleur 72, dite aval, coopérant avec la section d'échange 8 de façon à former un condenseur à eau secondaire CES. La conduite 70 est en outre équipée d'une vanne supplémentaire 73 et d'un capteur de température 74.

Un tronçon de recyclage 75 relie la conduite de retour 70, entre la section d'échange amont 65 et la vanne 71, avec la conduite d'arrivée 60, en amont de la pompe 64. Ce tronçon définit donc une boucle de recyclage d'eau BRE, permettant à cette eau de faire plusieurs passages dans le condenseur CEP, comme on le verra dans ce qui suit.

Une conduite 80 dite « de refroidissement par air » est piquée sur la conduite 70, de part et d'autre de la vanne 73. Elle est pourvue d'une vanne 81 et définit une section d'échange de chaleur 82, laquelle s'étend dans un échangeur de chaleur à air ECA de type connu en soi. De façon avantageuse, cet échangeur de chaleur est placé de façon judicieuse, de façon à garantir un échange optimal avec l'air ambiant. Cet échangeur est équipé de son ventilateur 83, ainsi que d'un capteur 84 de température d'air.

De plus un tronçon de liaison 85 relie la conduite 80 de refroidissement d'air et la conduite d'arrivée 60. Ce tronçon de liaison est piqué, à une première extrémité, entre la pompe 62 et le régulateur de pression 63 et, à son autre extrémité, au voisinage de la vanne 81. Ce tronçon 85 est équipé d'un pressostat 86, ainsi que d'une vanne 87.

Une conduite 90 dite « de refroidissement par le réfrigérant » s'étend entre la conduite 80, au voisinage de la vanne 81, et la conduite 70, au niveau de sa jonction avec cette conduite 80. Cette conduite 90 est équipée d'une vanne 91, puis définit une section d'échange de chaleur 92, propre à coopérer avec celle 12 définie par la ligne de dérivation LD. Ces sections 12 et 92 définissent un échangeur secondaire EVS pour le réfrigérant. En aval de cette section 92, en référence au fonctionnement normal, cette conduite est en outre munie d'un capteur de température 93 et d'un capteur de débit 94.

Enfin l'installation comprend un ballon de surpression 100, de type connu en soi, dont la fonction est de maintenir une pression constante sans que la pompe ne se remette en marche. Ce ballon est associé à une conduite de liaison 101, qui est piquée sur la conduite 60, entre la pompe 62 et le régulateur de pression 63.

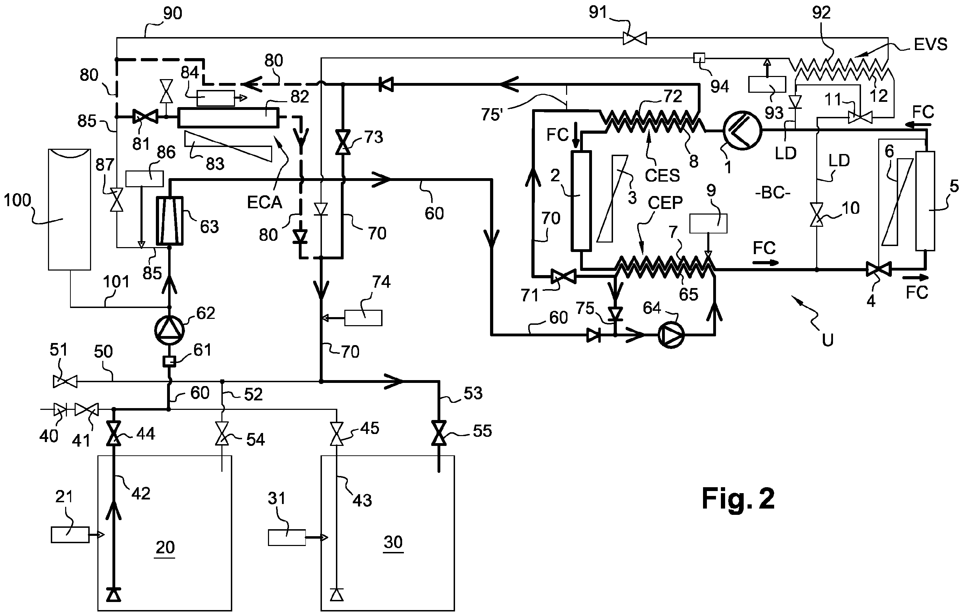

Plusieurs modes de mise en œuvre de l'installation, décrite ci-dessus, vont maintenant être explicités dans ce qui suit. On suppose dans un premier temps que de l'eau a été admise dans la cuve 20. Cette eau, dite froide, est typiquement à une température comprise entre 5 et 25°C. Sur les figures 2 et suivantes, lorsque l'eau circule le long d'un élément mécanique, l'écoulement principal est représenté en traits pleins et l'écoulement optionnel est représenté en traits mixtes, des flèches matérialisant le sens de ces écoulements. En revanche les autres éléments mécaniques, non traversés par l'eau, sont illustrés en traits pointillés.

La figure 2 illustre le cas de figure, où l'installation doit fonctionner en mode diurne de climatisation ou réfrigération, la température extérieure étant dans une plage habituelle. L'unité de production U est mise en marche, on fait circuler un réfrigérant le long de la ligne de circulation BC, selon les flèches FC. Cette circulation est réalisée de façon habituelle et ne sera pas décrite plus en détail, dans ce qui suit.

Afin de mettre en œuvre la condensation du réfrigérant, on choisit d'utiliser à la fois le condenseur à air 2, ainsi que les condenseurs à eau CEP et CES. Dans ce cas, on fixe par exemple une puissance réduite constante à ce condenseur à air. De la sorte ce condenseur à air peut être dimensionné de façon réduite, alors que sa consommation et ses nuisances sonores sont également limitées. Il convient donc, en complément du condenseur à air, d'extraire des calories du réfrigérant par l'intermédiaire de l'eau d'appoint circulant dans ces condenseurs CEP et CES.

A cet effet cette eau circule hors de la cuve 20, le long des conduites 42 et 60, jusqu'à la section d'échange 65. Cette eau extrait alors les calories du réfrigérant, qui circule dans l'autre section d'échange. En parallèle on mesure un paramètre du réfrigérant, représentatif de sa température à l'intérieur de la ligne de circulation, immédiatement en aval de l'étage de condensation. Ce paramètre peut, par exemple, être la température proprement dite, mais aussi la pression mesurée par l'intermédiaire du capteur 9.

Tant que la valeur mesurée par le capteur 9 se situe en dehors d'une plage de consigne prédéfinie, l'eau est renvoyée vers le condenseur, le long de la boucle de recyclage BRE, afin de continuer l'extraction de calories. Puis, lorsque cette valeur mesurée est à l'intérieur de cette plage, on arrête le recyclage de l'eau et on la dirige vers l'aval du condenseur principal CEP, le long de la conduite 70.

A titre d'exemple indicatif et non limitatif, le débit de l'eau de condensation est compris entre 20l/h et 50000l/h. Sa température dans la conduite 60, en amont de la section d'échange 65, est comprise entre 5 et 40°C, alors que sa température dans la conduite 70, en aval de cette même section d'échange, est comprise entre 30 et 80°C. Par ailleurs la température du réfrigérant, en amont de la section d'échange 7, est comprise entre 25 et 60°C alors que sa température, en aval de cette même section d'échange, est comprise entre 25 et 35°C. Ces températures sont variables, notamment en fonction de la nature du réfrigérant utilisé.

L'eau d'appoint circule alors dans la seconde section d'échange de chaleur 72, où elle extrait des calories du réfrigérant, lequel s'écoule dans la section d'échange 8, à l'intérieur du condenseur CES. En aval de cette section 72, l'eau présente une température comprise typiquement entre 40 et 70°c Elle est alors renvoyée vers la seconde cuve le long de la conduite 70, comme illustré en traits pleins sur la figure 2.

En revanche on suppose désormais que cette eau présente, en aval de la section 72, une température supérieure à un seuil prédéterminé, par exemple voisin de 43 °C. Ceci peut être dû au fait que la température extérieure est élevée, ou encore à cause d'un échange de chaleur important dans les condenseurs CEP et CES.

Dans ce cas, cette eau surchauffée est avantageusement envoyée vers la conduite 80 de refroidissement par air, comme illustré en traits mixtes sur la figure 2. Cette eau circule notamment dans la section d'échange 82, dans l'échangeur de chaleur ECA, de sorte que sa température soit abaissée. Ceci évite notamment toute dégradation au matériau constitutif de la deuxième cuve 30.

Au fur et à mesure du fonctionnement de l'unité U, l'eau est progressivement transférée de la cuve 20 vers la cuve 30. Un capteur de niveau bas non représenté peut commander, le cas échéant, l'admission d'eau supplémentaire via la vanne 41. A la fin de la journée, la cuve 20 est pratiquement vide, alors que celle 30 est pratiquement pleine. Un éventuel débordement de la cuve 30 est évité si un capteur de niveau haut, non représenté, détecte un niveau d'eau trop élevé, de sorte qu'il commande alors l'arrêt de l'écoulement d'eau.

Comme cela ressort de ce qui précède, la figure 2 explicite un premier trajet de l'eau au sens de l'invention, dans lequel il y a récupération, stockage et d'extraction de calories par l'eau. Dans un souci de concision, dans les revendications annexées, ce trajet est dénommé d'extraction de calories par l'eau. Ce trajet comprend successivement, dans le mode de réalisation en traits pleins, les conduites 70 et 80, ainsi que la section d'échange de chaleur 65. Dans le mode de réalisation en traits mixtes, ce premier trajet comprend en outre la conduite 80 de refroidissement par air.

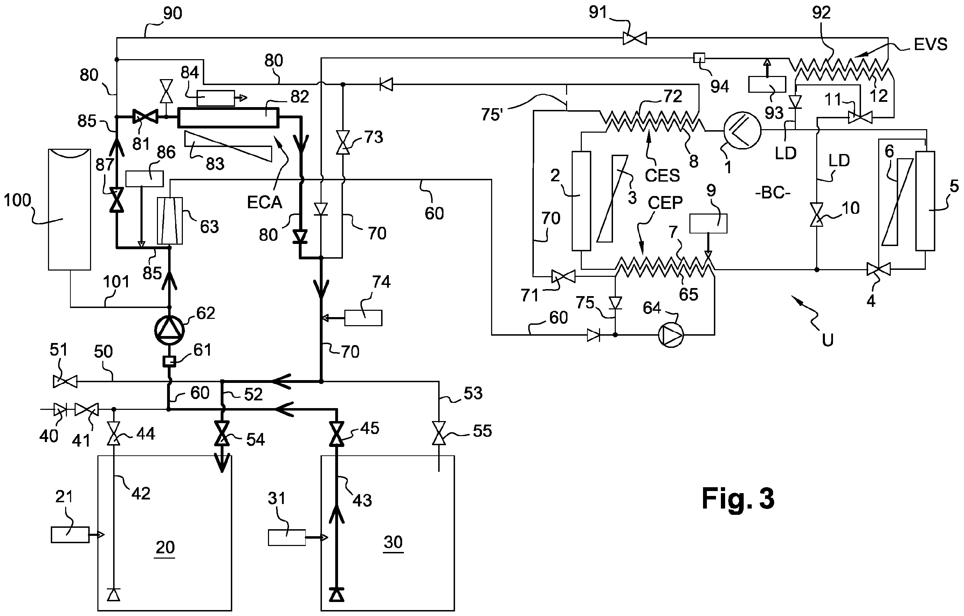

On suppose désormais, en référence à la figure 3, que l'installation est en mode nocturne d'arrêt, ou de fonctionnement réduit. Selon l'invention, on renvoie alors l'eau chaude, contenue dans la cuve 30, en direction de la cuve 20. Lors de ce transfert entre les cuves, l'eau est en outre refroidie, de manière à présenter une température inférieure à un seuil visé.

En effet l'eau refroidie, présente dans la cuve 20, peut être assimilée à un stock ou une réserve potentiel(le) de frigories, qui pourront être utilisées lorsque l'unité de production de froid devra disposer d'un complément de condensation, à savoir typiquement durant la journée du lendemain. Cette quantité de frigories stockées, qui dépend principalement de la température et du volume de l'eau, doit donc être suffisante pour répondre aux besoins de l'unité de production.

Selon l'invention, on détermine avantageusement ce besoin en frigories, avant de procéder au renvoi de l'eau, depuis la cuve 30 vers la cuve 20. Cette quantité de frigories prédéterminée est notamment fonction de la température prévue pour la journée du lendemain. A cet effet, l'installation conforme à l'invention inclut avantageusement un système de commande, permettant d'interroger des données météorologiques et de calculer cette quantité souhaitée.

Cette quantité de frigories prédéterminée peut également être fonction d'autres paramètres, notamment un besoin particulier en frigories indépendant de la température extérieure, ou encore la volonté de ne pas utiliser, ou de peu utiliser, le condenseur à air. Durant la saison froide, on peut aussi vouloir récupérer des calories pour produire de l'eau chaude et/ou du chauffage Cette quantité de frigories prédéterminée correspond à une température visée de l'eau, dite température seuil, après le renvoi de l'eau vers la cuve 20, le long d'un trajet de refroidissement. L'eau peut être refroidie de deux manières, durant ce trajet de la cuve 30 vers la cuve 20, à savoir par passage soit dans l'échangeur à air ECA, soit dans l'échangeur secondaire EVS.

Si le capteur 84 détecte que la température de l'air extérieur est bien inférieure à celle de l'eau présente dans la cuve 30, mesurée par le capteur 31, cette eau est extraite de la cuve 30 puis est dirigée dans les conduites successives 43, 60, 85 et 80 (voir figure 3). Elle est ensuite refroidie dans l'échangeur ECA, puis s'écoule dans les conduites successives 80, 70 et 52, de manière à être admise dans la cuve 20. Cette circulation d'eau correspond à un trajet dit de refroidissement de cette eau, au sens de l'invention.

La température de l'eau est alors mesurée par le capteur 21 et comparée au seuil visé, explicité ci-dessus. Si cette température mesurée est située au-dessous de ce seuil, il n'y a pas de circulation supplémentaire d'eau entre les cuves. En revanche, si la température mesurée est supérieure au seuil, on procède à un refroidissement supplémentaire de l'eau, par passage dans l'échangeur de chaleur à air.

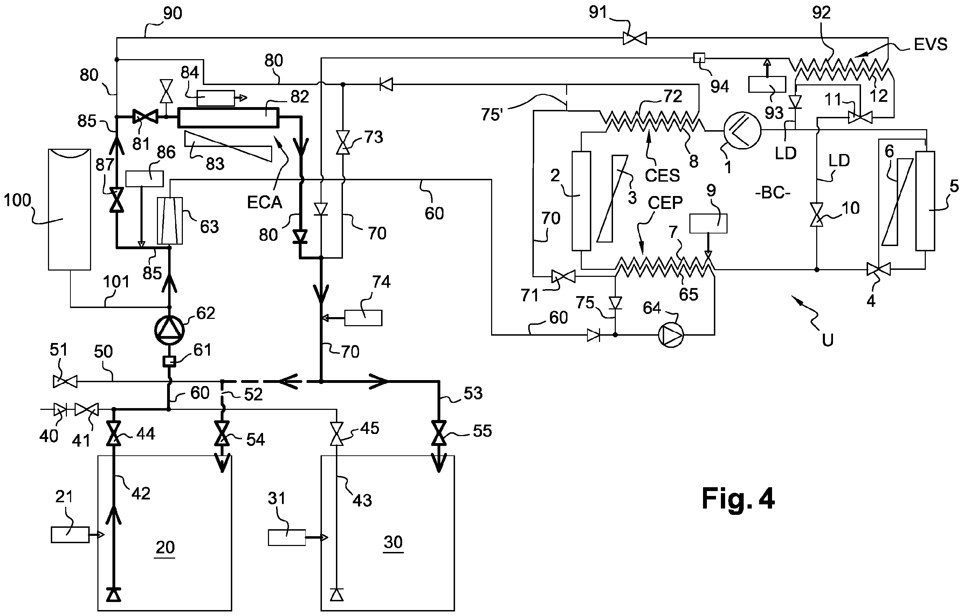

A cet effet, une première possibilité est illustrée en traits pleins à la figure 4. L'eau circule de la cuve 20 vers la cuve 30 selon le trajet inverse de celui décrit à la figure 3, via l'échangeur ECA. Elle est ensuite renvoyée vers la cuve 20, selon le trajet de refroidissement d'eau illustré à la figure 3. La température de l'eau est ensuite à nouveau mesurée, puis comparée au seuil.

Si cette mesure est au-dessous du seuil, la circulation de l'eau est arrêtée. En revanche, si cette température mesurée est encore au-dessus de ce seuil, l'eau circule selon au moins un aller-retour supplémentaire entre les cuves 20 et 30, jusqu'à ce que sa température soit inférieure à ce seuil. Au terme de cette circulation, l'eau est donc transférée de la cuve 30 vers la cuve 20 en faisant un nombre impair de trajets, à savoir un aller comme illustré à la figure 3, ainsi qu'au moins un aller-retour comme illustré aux figures 4 puis 3.

A titre de variante, illustrée en traits mixtes sur la figure 4, l'eau est tout d'abord extraite hors de la cuve 20, puis refroidie dans l'échangeur ECA. En revanche elle n'est pas dirigée vers la cuve 30, mais elle est au contraire retournée directement vers la cuve 20. L'eau circule une ou plusieurs fois à travers l'échangeur, le long de ce trajet de refroidissement en boucle fermée, jusqu'à ce que sa température soit suffisamment abaissée. L'eau est donc transférée de la cuve 30 vers la cuve 20, en faisant un aller comme illustré à la figure 3, puis autant de boucles que nécessaire autour de la cuve 20 comme illustré en traits mixtes à la figure 4.

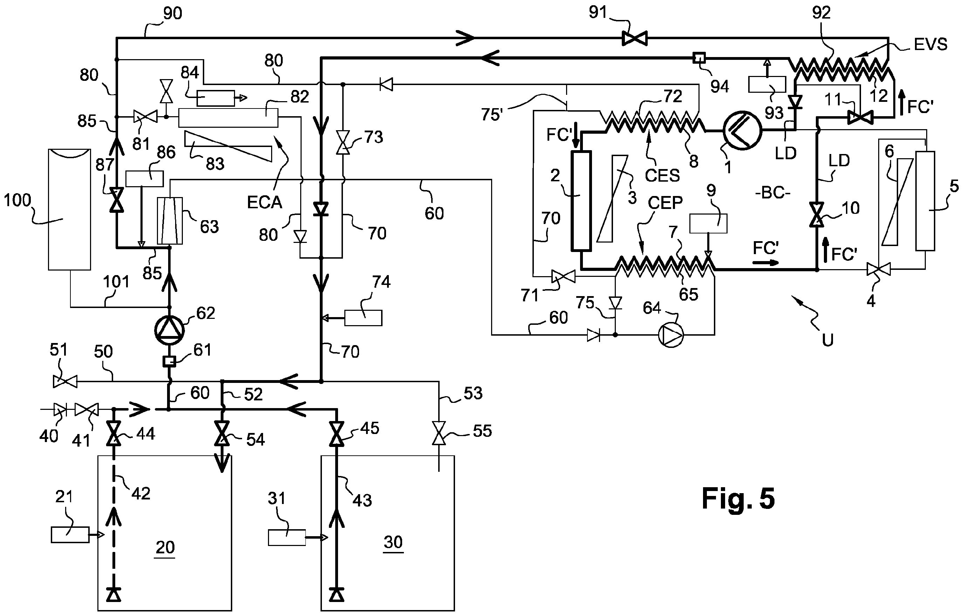

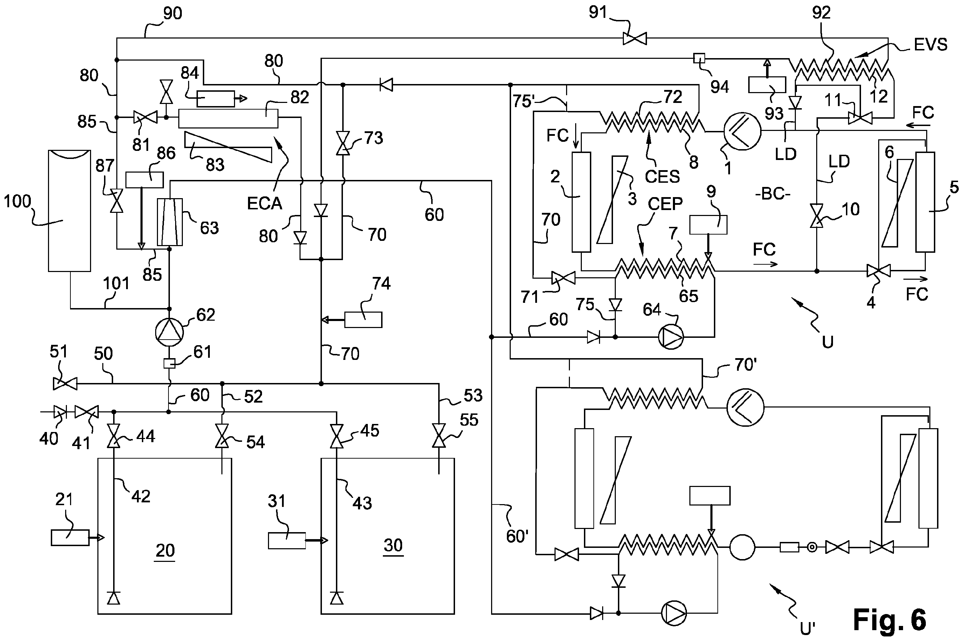

La figure 5 illustre une variante supplémentaire de l'invention, dans laquelle l'eau est refroidie, non pas dans l'échangeur à air, mais dans la section d'échange 92 de l'échangeur secondaire EVS. L'eau est alors mise en échange de chaleur avec le réfrigérant, lequel est à une température typiquement comprise entre -5°C et +5°C. Le réfrigérant circule dans l'unité selon les flèches FC', le long d'une boucle secondaire incluant la ligne dérivée LD.

Ce mode de refroidissement de l'eau, qui est plus efficace que celui réalisé par passage dans l'échangeur à air, est mis en œuvre en particulier dans les cas suivants :
- lorsque la température de l'air nocturne est trop élevée, pour que le refroidissement par air soit efficace ;
- lorsque le besoin en frigories de l'eau d'appoint est particulièrement élevé. Ceci se produit par exemple lorsque le jour suivant est annoncé comme particulièrement chaud, ou encore lorsque la charge est considérée comme importante ;
- lorsque l'échangeur à air est indisponible, par exemple en cas de panne momentanée.

Ce refroidissement est plus coûteux, que celui opéré par l'échangeur à air, car il est nécessaire de mettre en marche l'unité de production. Dans ces conditions, on préfère réaliser un seul passage de l'eau dans l'échangeur secondaire.

De façon typique, une première phase du refroidissement de l'eau est réalisée grâce à l'échangeur à air ECA, selon le processus décrit ci-dessus. Puis, au terme d'un certain nombre de passages dans cet échangeur, une phase finale de ce refroidissement est mise en œuvre grâce à l'échangeur secondaire EVS. En variante, notamment si l'échangeur à air est indisponible, on réalise directement plusieurs passages dans l'échangeur secondaire.

Dans l'exemple illustré, cet échangeur secondaire EVS est directement greffé sur l'unité frigorifique U. Cependant, à titre de variante non représentée, on peut prévoir de greffer cet échangeur secondaire sur un système frigorifique annexe distinct, spécialement dédié à cette fonction.

De manière détaillée, si l'eau est refroidie par air selon la variante illustrée en traits pleins à la figure 4, le refroidissement final par échange avec le réfrigérant s'opère lors du dernier trajet de la cuve 30 vers la cuve 20. L'eau circule le long des conduites 43, 60, 85 et 90, traverse l'échangeur EVS, puis circule le long des conduites 90, 70, et 53, jusque dans la cuve 20. Il est à noter que l'eau suit également ce même trajet, dans le cas où il n'y a pas de refroidissement dans l'échangeur à air, mais uniquement dans l'évaporateur secondaire. Ce trajet constitue une variante, au sens de l'invention, des trajets de refroidissement d'eau décrits ci-dessus, s'étendant à travers l'échangeur à air ECA.

En revanche si l'eau est refroidie par air selon la variante illustrée en traits mixtes à la figure 4, le refroidissement final par échange gaz/eau s'opère lors de la dernière boucle autour de la cuve 1. L'eau est tout d'abord extraite le long de la conduite 42, comme illustré en traits mixtes. Puis, comme dans la variante principale, cette eau circule le long des conduites 60, 85 et 90, traverse l'évaporateur EVS, puis circule le long des conduites 90, 70, 53 et 54, jusque dans la cuve 20.

Dans les deux possibilités décrites immédiatement ci-dessus, le débit et la température du réfrigérant sont choisis, de sorte que l'eau présente une température inférieure à celle visée, au terme de cette ultime phase de refroidissement.

Comme montré sur les figures, l'installation conforme à l'invention peut comprendre plusieurs unités de production de froid, à savoir une unité supplémentaire U' analogue à celle U ci-dessus. L'eau d'appoint peut circuler au voisinage de cette unité U', de façon à réaliser une condensation complémentaire du réfrigérant. A cet effet, l'eau est envoyée vers cette unité U' via une conduite 60', piquée sur la conduite 60, puis renvoyée de cette unité U' via une conduite 70', piquée sur la conduite 70. On peut prévoir encore d'autres unités supplémentaires, disposées en parallèle de celles U et U'.

A titre de variante optionnelle on peut prévoir de relier les conduites 70 et 80 au moyen d'un tronçon de recyclage 75'. Ce dernier, qui est représenté en traits pointillés, est analogue à celui 75, mais en revanche peut être dépourvu de vanne. De la sorte, il est possible de faire circuler l'eau plusieurs fois dans le condenseur secondaire CES.

A titre de variante non représentée, on peut prévoir que la première et la deuxième cuves sont confondues en une cuve unique de stockage. Dans ce cas, les conduites 42 et 43 sont confondues en une conduite unique, tout comme les conduites 52 et 53. Les trajets de l'eau, qui sont alors des boucles autour de cette cuve unique, sont analogues à ceux décrits ci-dessus.

## Revendications

1. Installation de production de froid, comprenant au moins une unité de production de froid (U, U') qui comporte
- une boucle principale (BC) de circulation d'un fluide frigorigène, ou réfrigérant,
ainsi que, disposés selon le sens d'écoulement du réfrigérant dans la boucle de circulation :
- des moyens (1) de compression du réfrigérant,
- des moyens de condensation du réfrigérant comprimé,
- des moyens (4) de détente du réfrigérant comprimé,
- des moyens d'évaporation du réfrigérant détendu, comprenant un évaporateur principal (5) ; et
- un dispositif auxiliaire de circulation d'eau en vue de l'extraction de calories par l'eau au niveau des moyens de condensation ;
**caractérisée en ce que**
le dispositif auxiliaire de circulation d'eau comporte
- au moins une première cuve de stockage d'eau (20),
- au moins une seconde cuve de stockage d'eau (30),
- un premier trajet, dit d'extraction de calories par l'eau, depuis la première cuve vers la seconde cuve,
- un second trajet, dit de refroidissement d'eau, depuis la seconde cuve vers la première cuve, le ou chaque second trajet comprenant au moins une section (82, 92) de refroidissement d'eau, dans un échangeur de chaleur (ECA, EVS) ;
le ou les premiers trajets et le ou les deuxièmes trajets sont des trajets alternatifs pour l'eau du dispositif auxiliaire de circulation d'eau.

2. Installation selon la revendication 1, **caractérisée en ce que** le dispositif auxiliaire de circulation d'eau forme un circuit fermé.

3. Installation selon l'une des revendications 1 et 2, **caractérisée en ce que** les moyens de condensation du réfrigérant comprimé comprennent un condenseur à air (2) et un condenseur à eau principal (CEP), le ou chaque premier trajet comprenant au moins une section principale (65) d'extraction de calories par l'eau, propre à coopérer avec une section principale d'échange de chaleur (7) du réfrigérant, dans le condenseur à eau principal (CEP).

4. Installation selon l'une des revendications 1 à 3, **caractérisée en ce que** le premier trajet comprend en outre une section secondaire (72) d'extraction de calories par l'eau, propre à coopérer avec une section secondaire (8) d'échange de chaleur du réfrigérant, dans un condenseur à eau secondaire (CES), ces deux condenseurs à eau étant disposés de part et d'autre du condenseur à air (2).

5. Installation selon l'une des revendications 1 à 4, **caractérisée en ce que** le premier trajet comprend en outre une section (82) de refroidissement de l'eau surchauffée, dont la température est supérieure à un seuil prédéfini, ladite section s'étendant dans un échangeur de chaleur à air (ECA).

6. Installation selon l'une des revendications 1 à 5, **caractérisée en ce que** le second trajet comprend une section (82) de refroidissement par air, s'étendant dans un échangeur de chaleur à air (ECA).

7. Installation selon l'une des revendications 1 à 6, **caractérisée en ce que** l'unité de production comprend une ligne dérivée d'évaporation (LD), piquée sur la boucle principale, cette ligne dérivée définissant une boucle secondaire de circulation et comprenant une section secondaire (12) d'évaporation du réfrigérant, le trajet de refroidissement d'eau comprenant une section de refroidissement par le réfrigérant (92), propre à coopérer avec cette section secondaire d'évaporation.

8. Procédé de mise en oeuvre de l'installation selon l'une des revendications 1 à 7, dans lequel :
- on fait circuler du réfrigérant le long de la boucle de circulation principale (BC), de manière à produire du froid ;
- on fait circuler de l'eau froide depuis la première cuve (20) le long du premier trajet, et on extrait des calories du réfrigérant ;
- on envoie l'eau initialement froide et réchauffée vers la seconde cuve (30), le long du premier trajet ; puis
- on renvoie de l'eau réchauffée, depuis la seconde cuve (30) vers la première cuve (20), le long du second trajet, et on refroidit cette eau réchauffée en la faisant passer au moins une fois dans la ou les sections de refroidissement d'eau (82, 92).

9. Procédé selon la revendication 8, **caractérisé en ce que** l'envoi de l'eau vers la seconde cuve le long du premier trajet et le renvoi de l'eau depuis la seconde cuve (30) vers la première cuve le long du second trajet ont lieu à des périodes de fonctionnement distinctes.

10. Procédé selon l'une des revendications 8 et 9, **caractérisé en ce que** l'envoi de l'eau vers la seconde cuve le long du premier trajet a lieu le jour et/ou le renvoi de l'eau depuis la seconde cuve (30) vers la première cuve le long du second trajet a lieu la nuit.

11. Procédé selon l'une des revendications 8 à 10, l'installation étant selon la revendication 5, et dans lequel on recycle l'eau depuis l'aval vers l'amont du condenseur à eau principal (CEP), jusqu'à ce qu'une valeur représentative de la pression du réfrigérant, en aval du condenseur à eau principal, passe au-dessous d'une valeur seuil.

12. Procédé selon l'une des revendications 8 à 11, pour la mise en oeuvre d'une installation selon l'une des revendications 8 ou 9, dans lequel on estime une température seuil de l'eau, et on refroidit l'eau en la faisant circuler une ou plusieurs fois dans la section de refroidissement par air (82), jusqu'à ce que la température de l'eau passe au-dessous de ce seuil.

13. Procédé selon l'une des revendications 8 à 12, pour la mise en oeuvre d'une installation selon la revendication 7, dans lequel on estime une température seuil de l'eau, on fait circuler le réfrigérant dans la boucle secondaire (LD), et on refroidit l'eau en la faisant circuler dans la section de refroidissement par le réfrigérant (92), afin que la température de l'eau passe au-dessous de ce seuil.

14. Procédé selon les revendications 12 et 13, pour la mise en œuvre d'une installation selon les revendications 6 et 7, dans lequel on fait circuler l'eau une ou plusieurs fois dans la section de refroidissement par air (82), et on fait ensuite circuler cette eau dans la section de refroidissement par le réfrigérant (92), avant d'admettre cette eau dans la première cuve.

## Patentansprüche

1. Kälteerzeugungsanlage, die mindestens eine Kälteerzeugungseinheit (U, U' umfasst), die Folgendes beinhaltet
- einen Hauptkreislauf (BC) zum Umwälzen einer Kühlflüssigkeit oder eines Kältemittels, sowie Folgendes in Reihenfolge der Strömungsrichtung des Kältemittels im Kreislauf:
- Mittel (1) zum Komprimieren des Kältemittels,
- Mittel zum Kondensieren des komprimierten Kältemittels,
- Mittel (4) zum Expandieren des komprimierten Kältemittels,
- Mittel zur Verdampfung des expandierten Kältemittels, die einen Hauptverdampfer (5) umfassen, sowie
- eine Hilfseinrichtung zum Umwälzen von Wasser, um der Mittel zum Kondensieren durch das Wasser Wärme zu entziehen,
**dadurch gekennzeichnet, dass**
die Hilfseinrichtung zum Umwälzen von Wasser Folgendes umfasst:
- mindestens einen ersten Wassertank (20),
- mindestens einen zweiten Wassertank (30),
- einen ersten Pfad vom ersten Tank zum zweiten Tank, genannt als zum Entziehen von Wärme durch das Wasser,
- einen zweiten Pfad vom zweiten Tank zum ersten Tank, genannt als zur Wasserkühlung, wobei der zweite oder alle zweite Pfade, genannt als zur Wasserkühlung, mindestens einen Abschnitt (82, 92) zum Kühlen von Wasser in einem Wärmetauscher (ECA, EVS) umfasst, und wobei der erste oder alle erste Pfade und der zweite oder alle zweite Pfade alternative Pfade für das Wasser der Hilfseinrichtung zum Umwälzen von Wasser sind.

2. Anlage nach Anspruch 1, **dadurch gekennzeichnet, dass** die Hilfseinrichtung zum Umwälzen von Wasser einen geschlossenen Kreislauf bildet.

3. Anlage nach einem der Ansprüche 1 oder 2, **dadurch gekennzeichnet, dass** die Mittel zum Kondensieren des komprimierten Kühlmittels einen Luftkondensator (2) und einen Hauptwasserkondensator (CEP) umfasst, wobei der oder alle ersten Pfade mindestens einen Hauptabschnitt (65) zum Entziehen von Wärme durch Wasser umfassen, das mit einem Hauptabschnitt zum Wärmetauschen (7) im Haupt-Luftkondensator (CEP) zusammenwirken kann.

4. Anlage nach einem der Ansprüche 1 bis 3, **dadurch gekennzeichnet, dass** der erste Pfad ferner einen zweiten Abschnitt (72) zum Entziehen von Wärme durch Wasser aufweist, der dazu geeignet ist, mit einem zweiten Abschnitt (8) des Wärmeaustausches des Kältemittels in einem sekundären Wasserkondensator (CES) zusammenzuwirken, wobei diese beiden Wasserkondensatoren zu beiden Seiten des Luftkondensators (2) angeordnet sind.

5. Anlage nach einem der Ansprüche 1 bis 4, **dadurch gekennzeichnet, dass** der erste Pfad ferner einen Abschnitt (82) zum Kühlen des heißen Wassers aufweist, dessen Temperatur über einem vordefinierten Schwellenwert liegt, wobei sich dieser Abschnitt bis in einen Luftwärmetauscher (ECA) erstreckt.

6. Anlage nach einem der Ansprüche 1 bis 5, **dadurch gekennzeichnet, dass** der zweite Pfad einen Abschnitt (82) zur Luftkühlung umfasst, der sich bis in einen Luftwärmetauscher (ECA) erstreckt.

7. Anlage nach einem der Ansprüche 1 bis 6, **dadurch gekennzeichnet, dass** die Erzeugungseinheit eine Verdunstungsableitung (LD) umfasst, die auf den Hauptkreislauf aufgesetzt ist, wobei diese Ableitung einen zweiten Kreislauf darstellt und einen zweiten Kältemittelverdampfungs-Abschnitt (12) umfasst, wobei der Wasserkühlpfad einen Kältemittelkühl-Abschnitt (92) umfasst, der zum Zusammenwirken mit diesem zweiten Verdampfungs-Abschnitt geeignet ist.

8. Verfahren zum Betreiben der Anlage nach einem der Ansprüche 1 bis 7, bei dem
- Kältemittel über die Länge des Hauptkreislaufs (HK) umgewälzt wird, um Kälte zu erzeugen,
- kaltes Wasser aus dem ersten Tank (20) entlang des ersten Pfades umgewälzt und dem Kältemittel Wärme entzogen wird,
- das anfänglich kalte und erwärmte Wasser entlang des ersten Pfades zum zweiten Tank (30) geleitet wird, und
- erwärmtes Wasser entlang des zweiten Pfades vom zweiten Tank (30) zum ersten Tank (20) geleitet wird, und dieses erwärmte Wasser durch mindestens einmaliges Hindurchleiten durch den/die Wasserkühlungsabschnitte/n (82, 92) erwärmt wird.

9. Verfahren nach Anspruch 8, **dadurch gekennzeichnet, dass** das Einleiten von Wasser in den zweiten Tank entlang des ersten Pfades und das Zurückführen des Wassers aus dem zweiten Tank (30) in den ersten Tank entlang des zweiten Pfades zu unterschiedlichen Betriebszeiten stattfindet.

10. Verfahren nach einem der Ansprüche 8 und 9, **dadurch gekennzeichnet, dass** das Leiten des entlang des ersten Pfades zum zweiten Tank am Tag und/oder die Rückführung von Wasser entlang des zweiten Pfades aus dem zweiten Tank zum ersten Tank nachts stattfindet.

11. Verfahren nach einem der Ansprüche 8 bis 10 mit Anlage nach Anspruch 5, wobei das Wasser vom stromabwärtigen zum stromaufwärtigen Hauptwasserkondensator (CEP) rückgeführt wird, bis ein Wert, der für den Kältemitteldruck steht, stromabwärts des Hauptwasserkondensators einen Schwellwert unterschreitet.

12. Verfahren nach einem der Ansprüche 8 bis 11 zum Betrieb einer Anlage nach einem der Ansprüche 8 oder 9, bei der eine Schwellentemperatur von Wasser bestimmt wird und Wasser durch ein- oder mehrmaliges Umwälzen im Luftkühlabschnitt (82) gekühlt wird, bis die Wassertemperatur unter diese Grenztemperatur fällt.

13. Verfahren nach einem der Ansprüche 8 bis 12 zum Betrieb einer Anlage nach Anspruch 7, wobei eine Schwellentemperatur des Wassers bestimmt wird, das Kältemittel im Sekundärkreislauf (LD) umgewälzt wird und das Wasser gekühlt wird, indem es im Kühlabschnitt durch das Kältemittel (92) umgewälzt wird, so dass die Wassertemperatur unter diesen Schwellenwert fällt.

14. Verfahren nach den Ansprüchen 12 und 13 zum Betrieb einer Anlage nach den Ansprüchen 6 und 7, wobei das Wasser ein- oder mehrmals im Luftkühlabschnitt (82) umgewälzt wird und dieses Wasser dann im Kühlabschnitt durch das Kältemittel (92) umgewälzt wird, bevor dieses Wasser in den ersten Tank eingeleitet wird.

## Claims

1. A cold production installation comprising at least one cold production unit (U, U'), which comprises
- a main loop (BC) for circulation of a coolant or refrigerant,
and, disposed in the flow direction of the refrigerant in the circulation loop:
- means (1) for compression of the refrigerant,
- means for condensation of the compressed refrigerant,
- means (4) for expansion of the compressed refrigerant,
- means for evaporation of the expanded refrigerant, comprising a main evaporator (5); and
- an auxiliary water circulation device for circulation of water with a view to extracting calories from the water at the level of the means for condensation;
**characterised in that**
the auxiliary water circulation device comprises
- at least one first water storage tank (20),
- at least one second water storage tank (30),
- a first route, called extraction of calories by water, from the first tank to the second tank,
- a second route, called water cooling, from the second tank to the first tank, the or each second route comprising at least one water cooling section (82, 92), in a heat exchanger (ECA, EVS);
the first route(s) and the second route(s) are alternative routes for the water from the auxiliary water circulation device.

2. Installation according to claim 1, **characterised in that** the auxiliary water-cooling device forms a closed circuit.

3. Installation according to any one of the claims 1 and 2, **characterised in that** the means for condensation of the compressed refrigerant comprise an air condenser (2) and a main water condenser (CEP), the or each first route comprising at least one main section (65) for an extraction of calories by water, adapted to cooperate with a main heat exchange section (7) of the refrigerant, in the main water condenser (CEP).

4. Installation according to any one of the claims 1 to 3, **characterised in that** the first route comprises a secondary section (72) for extraction of calories by water, adapted to cooperate with a secondary heat exchange section (8) for the refrigerant, in a secondary water condenser (CES), these two water condensers being disposed on either side of the air condenser (2).

5. Installation according to any one of claims 1 to 4, **characterised in that** the first route further comprises a section (82) for cooling the superheated water, which has a temperature above a predefined threshold, with the said section extending into an air heat exchanger (ECA).

6. Installation according to any one of claims 1 to 5, **characterised in that** the second route comprises a secondary air-cooling section (82), extending to an air heat exchanger (ECA).

7. Installation according to any one of claims 1 to 6, **characterised in that** the production unit comprises a derived evaporation line (LD), stitched on the main loop, this derived line defining a secondary circulation loop and comprising a secondary refrigerant evaporation section (12), the water cooling path comprising a cooling section by the refrigerant (92), adapted to cooperate with this secondary evaporation section.

8. A method to implement the installation according to any one of claims 1 to 7, wherein:
- refrigerant is circulated along the main loop (BC) for circulation, so as to produce cold;
- cold water is circulated from the first tank (20) along the first route, and calories are extracted from the refrigerant;
- the water, initially cold and heated, is sent to the second tank (30) along the first route; then
- the heated water is returned from the second tank (30) to the first tank (20) along the second route, and this heated water is cooled by passing it at least once through the water cooling section or sections (82, 92).

9. The method according to claim 8, **characterized in that** the sending of water to the second tank along the first route and the return of the water from the second tank (30) to the first tank along the second route take place during different operating periods.

10. The method according to any one of claims 8 and 9, **characterised in that** the sending of water to the second tank along the first route takes place during the day and/or the sending of water from the second tank (30) to the first tank along the second route takes place at night.

11. The method according to any one of claims 8 to 10, the installation being according to claim 5, and wherein the water is recycled from downstream of the main water condenser (CEP) and returned upstream, until a value representative of the refrigerant pressure, downstream of the main water condenser, passes below a threshold value.

12. The method according to any one of claims 8 to 11, for the implementation of an installation according to any one of claims 8 or 9, wherein a threshold temperature of the water is estimated, and the water is cooled by circulating it one or more times in the air cooling section (82) until the water temperature passes below this threshold.

13. The method according to any one of claims 8 to 12, for the implementation of an installation according to claim 7, wherein a water threshold temperature is estimated, the refrigerant is circulated in the secondary loop (LD), and the water is cooled by circulating it in the refrigerant cooling section (92), so that the water temperature passes below this threshold.

14. The method according to any one of claims 12 and 13, for the implementation of an installation according to claims 6 and 7, wherein the water is circulated one or more times in the air cooling section (82), and this water is then circulated in the refrigerant cooling section (92), before admitting this water into the first tank.
